(19) Europäisches Patentamt
European Patent Office
Office européen des brevets

(11) **EP 1 515 226 B1**

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(51) Int Cl.:
***G06F 7/72*** *(2006.01)*

(21) Anmeldenummer: **04021411.6**

(22) Anmeldetag: **09.09.2004**

(54) **Modulare Multiplikation**

Modular mutliplication

Multiplication modulaire

(84) Benannte Vertragsstaaten:
**AT BE BG CH CY CZ DE DK EE ES FI FR GB GR HU IE IT LI LU MC NL PL PT RO SE SI SK TR**

(30) Priorität: **10.09.2003 DE 10341803**

(43) Veröffentlichungstag der Anmeldung:
**16.03.2005 Patentblatt 2005/11**

(73) Patentinhaber: **Giesecke & Devrient GmbH**
**81667 München (DE)**

(72) Erfinder: **Kahl, Helmut, Dr.**
**80992 München (DE)**

(74) Vertreter: **Dendorfer, Claus et al**
**Dendorfer & Herrmann**
**Patentanwälte Partnerschaft**
**Bayerstrasse 3**
**80335 München (DE)**

(56) Entgegenhaltungen:
**EP-A- 1 656 611        WO-A-20/05022378**

- **FISCHER W ET AL: "INCREASING THE BITLENGTH OF A CRYPTO-COPROCESSOR" CRYPTOGRAPHIC HARDWARE AND EMBEDDED SYSTEMS. INTERNATIONAL WORKSHOP, 13. August 2002 (2002-08-13), Seiten 71-81, XP001160522**

**Beschreibung**

Die Erfindung betrifft allgemein das technische Gebiet der maschinellen Ausführung arithmetischer Operationen und spezieller das Gebiet der modularen Multiplikation zweier Zahlen. Insbesondere eignet sich die Erfindung zum Einsatz bei kryptographischen Berechnungen, wie sie beispielsweise von tragbaren Datenträgern ausgeführt werden. In der hier verwendeten Wortwahl kann ein tragbarer Datenträger beispielsweise eine Chipkarte oder ein Chipmodul in unterschiedlichen Bauformen oder ein sonstiges ressourcenbeschränktes System sein.

Leistungsfähige tragbare Datenträger weisen in der Regel eine spezielle Hardwareunterstützung für arithmetische Operationen auf, die z.B. als arithmetischer oder kryptographischer Koprozessor ausgestaltet sein kann. Diese Hardwareunterstützung ist jedoch auf Berechnungen beschränkt, deren Operanden und Ergebnisse hinsichtlich ihrer Stellenanzahl eine vorgegebene Maximallänge nicht überschreiten. Insbesondere im Zusammenhang mit modularer Arithmetik - z.B. der hier betrachteten modularen Multiplikation - ist es nicht einfach, die von der Hardwareunterstützung vorgegebene Längenbegrenzung zu überwinden.

Auf dem Gebiet der Kryptographie werden modulare Multiplikationen beispielsweise bei dem im US-Patent 4,405,829 beschriebenen RSA-Verfahren ausgeführt. Bei diesem Verfahren erfolgt eine modulare Potenzberechnung eines zu ver- oder entschlüsselnden Wertes bezüglich eines Moduls, das das Produkt zweier großer Primzahlen ist. Die modulare Potenzberechnung wird in der Regel durch eine Folge modularer Multiplikationen ausgeführt. Da die Sicherheit des RSA-Verfahrens auf der Schwierigkeit beruht, den Modul ohne Zusatzinformationen in die beiden Primzahlen zu faktorisieren, soll der Modul eine möglichst große Stellenanzahl aufweisen. Je nach dem konkreten Anwendungsfall kann es wünschenswert sein, eine Stellenanzahl zu verwenden, die größer als die von der Hardware des Datenträgers vorgegebene Maximallänge für die modulare Arithmetik ist.

Auch wenn bei der Entwicklung des Datenträgers auf eine ausreichende Stellenanzahl der Arithmetikfunktionen geachtet wurde, kann sich dennoch durch neue Erkenntnisse das Erfordernis nach Operationen mit größerer Stellenanzahl ergeben. So kann z.B. bei der Entwicklung des Datenträgers vorgesehen worden sein, RSA-Berechnungen unter Verwendung des Chinesischen Restklassensatzes (CRT - *Chinese Remainder Theorem*) auszuführen, wodurch sich die erforderliche Stellenanzahl der modularen Arithmetikfunktionen ungefähr halbiert. Es sind jedoch Angriffsmöglichkeiten gegen RSA-CRT-Berechnungen entdeckt worden, die es für manche Anwendungsgebiete sinnvoll erscheinen lassen, auf die Verwendung des Chinesischen Restklassensatzes zu verzichten. Um auch in diesem Fall RSA-Berechnungen mit der ursprünglich vorgesehenen Schlüssellänge durchführen zu können, wird ein Verfahren zur modularen Multiplikation benötigt, dessen Stellenanzahl ungefähr doppelt so groß wie die Stellenanzahl der von der Hardware des Datenträgers bereitgestellten Operationen ist.

Da insbesondere bei tragbaren Datenträgern die zur Verfügung stehende Rechenleistung stets knapp bemessen ist, ist die Effizienz eines Verfahrens zur modularen Multiplikation ein wichtiger Gesichtspunkt. Besonders wünschenswert ist ein Verfahren, dessen Effizienz im Hinblick auf die bereits erwähnte Verwendung im Rahmen einer modularen Potenzberechnung optimiert ist. Dies ist dann der Fall, wenn sich die bei einer modularen Potenzberechnung wiederholt ausgeführten Schritte des Multiplikationsverfahrens mit besonders wenig Rechenzeit und/ oder Speicherplatz implementieren lassen. Vor- und nachbereitende Schritte des Multiplikationsverfahrens, die auch im Rahmen einer modularen Potenzberechnung nur einmal ausgeführt werden, sind dagegen weniger kritisch.

Im Zusammenhang mit der Eignung des Multiplikationsverfahrens als wiederholt ausgeführter Baustein einer modularen Potenzberechnung ist ferner zu berücksichtigen, daß bei dem Potenzberechnungsverfahren aus Gründen des Ausspähungsschutzes möglicherweise stets beide Faktoren zweier aufeinanderfolgender Multiplikationen variiert werden. Ein Multiplikationsverfahren, das einen der Faktoren als konstant voraussetzt und diesen Faktor daher schon bei einem vorbereitenden Berechnungsschritt heranzieht, ist somit weniger vorteilhaft.

Aus der Literatur sind bereits Verfahren zur modularen Multiplikation bekannt, die auf vorgegebenen Operationen aufsetzen und deren Stellenanzahl ungefähr verdoppeln. So wird in dem Artikel "Low-cost double-size modular exponentation or how to stretch you cryptoprocessor" von P. Paillier, erschienen in dem Buch "Public-Key Cryptography", Band 1560 der Lecture Notes in Computer Science, Springer-Verlag, 1999, Seiten 223 - 234, ein modulares Multiplikationsverfahren beschrieben, das auf neun modulare Multiplikationen mit ungefähr je der halben Stellenanzahl abgestützt ist.

Der Konferenzbeitrag "Increasing the bitlength of a crypto-coprocessor" von W. Fischer und J.-P. Seifert, erschienen in dem Tagungsband zum "Workshop on Cryptographic Hardware and Embedded Systems 2002 (CHES 2002)", Band 2523 der Lecture Notes in Computer Science, Springer-Verlag, 2003, Seiten 71 - 81, beschreibt mehrere Verfahren, bei denen eine modulare Multiplikation auf eine spezielle Operation abgestützt wird, die als MultModDiv-Operation bezeichnet wird. Das effizienteste von Fischer und Seifert beschriebene Verfahren benötigt sechs *MultMod-Div*-Operationen zum Ausführen einer modularen Multiplikation ungefähr verdoppelter Stellenanzahl.

Auf den Seiten 294 und 295 des Buches "The Art of Computer Programming" von Donald E. Knuth, Band 2, 3. Auflage, Addison-Wesley, 1997, ist ein Multiplikationsverfahren für ganze Zahlen erläutert, das insbesondere für große Stellenanzahlen Vorteile aufweist. Ein ähnliches Verfahren ist in dem Artikel "Multiplication of multidigit numbers on automata" von A. Karatsuba und Yu. Ofman, Soviet Physics - Dokladay, 7,1963, Seiten 595 - 596 beschrieben.

Das nachveröffentlichte Dokument WO 2005/022378 A1 zeigt ein Multiplikationsverfahren, ohne jedoch dessen Ausführung durch einen tragbaren Datenträger zu offenbaren.

Aufgabe der Erfindung ist es, die oben dargestellten Probleme zumindest zum Teil zu vermeiden und eine Technik zum maschinellen Ausführen einer modularen Multiplikation vorzuschlagen, die besonders effizient arbeitet. In bevorzugten Ausgestaltungen soll die vorgeschlagene Technik eine bereits vorhandene Hardwareunterstützung, die für modulare Arithmetik mit einer vorbestimmten Stellenanzahl ausgelegt ist, nutzen, um eine modulare Multiplikation mit einer höheren Stellenanzahl bereitzustellen. Bevorzugte Ausgestaltungen der Technik sollen besonders gut zum Einsatz bei kryptographischen Verfahren und/oder tragbaren Datenträgern geeignet sein.

Erfindungsgemäß wird diese Aufgabe ganz oder zum Teil gelöst durch ein Verfahren mit den Merkmalen des Anspruchs 1, ein Computerprogrammprodukt gemäß Anspruch 14 und einen tragbaren Datenträger gemäß Anspruch 15. Die abhängigen Ansprüche definieren bevorzugte Ausgestaltungen der Erfindung.

Bei dem erfindungsgemäßen Verfahren wird die modulare Multiplikation auf *MultModDiv*-Operationen mit geringerer Stellenanzahl abgestützt. Eine *MultModDiv*-Operation berechnet den ganzzahligen Quotienten und den Rest, der sich bei einer Division des Produkts zweier Faktoren durch einen Divisor ergibt. Derartige *MultModDiv*-Operationen sind als solche bereits aus dem oben gewürdigten Verfahren von Fischer und Seifert bekannt. Anders als das Verfahren von Fischer und Seifert benötigt das erfindungsgemäße Verfahren weniger als sechs, vorzugsweise fünf *MultModDiv*-Operationen für eine Multiplikation. Es ergibt sich damit gegenüber dem bekannten Verfahren eine Effizienzsteigerung um mindestens den Faktor 6/5, die bei vielen Anwendungen einen erheblichen Vorteil darstellt.

Die in den Ansprüchen gewählte Benennung von Rechenoperationen und Operanden als "erste", "zweite", "dritte" und "weitere" Operation bzw. "erster" und "zweiter" Faktor soll lediglich zur Bezeichnung dienen und keine Reihenfolge implizieren. Insbesondere können die *MultModDiv*-Operationen auch in einer anderen Reihenfolge als der Aufzählungsreihenfolge in den Patentansprüchen ausgeführt werden. So können beispielsweise die "erste", "zweite" und "dritte" *MultModDiv*-Operation untereinander beliebig vertauscht werden, und auch die "weitere" Operation oder die "weiteren" Operationen braucht/ brauchen nicht notwendigerweise erst im Anschluß an die "erste", "zweite" und "dritte" *MultModDiv*-Operation ausgeführt zu werden. Ferner sind auch Ausgestaltungen der Erfindung vorgesehen, in denen die genannten Operationen ganz oder teilweise parallel und/ oder ganz oder teilweise ineinander verzahnt (*interleaved*) ausgeführt werden.

Erfindungsgemäß werden die bezüglich des Moduls N modular zu multiplizierenden Werte A und B in Form von je zwei Teilwerten A1, A0 bzw. B1, B0 dargestellt, die dem ganzzahligen Quotienten bzw. dem Rest einer Division des Wertes A bzw. B durch einen Aufteilungswert Z entsprechen. In unterschiedlichen Ausgestaltungen des Verfahrens kann die Berechnung der Teilwerte A1, A0, B1, B0 aus den zu multiplizierenden Werten A, B Bestandteil des Multiplikationsverfahrens sein, oder die Berechnung kann in einem vorbereitenden Schritt erfolgen, oder die Werte A, B können bereits als Ergebnis anderer Berechnungen in Form der entsprechenden Teilwerte A1, A0, B1, B0 vorliegen. Die Teilwerte A1, A0, B1, B0 werden erfindungsgemäß zusammen mit dem Aufteilungswert Z in drei *MultModDiv*-Operationen verwertet, und zumindest ein Ergebnis dieser drei *MultModDiv*-Operationen wird in genau zwei weiteren *MultModDiv*-Operation verwertet.

Je ein Faktor der genau zwei weiteren *MultModDiv*-Operation ist ein Ergänzungswert N0, für den Z*Z = -N0 modulo N gilt. In bevorzugten Ausgestaltungen wird der Ergänzungswert N0 in einem vorbereitenden Verfahrensschritt berechnet, während er in anderen Ausführungsformen fest vorgegeben ist oder erst bei der eigentlichen Multiplikation bestimmt wird. In Abhängigkeit von zumindest einem Ergebnis der insgesamt ausgeführten *MultModDiv*-Operation wird dann das Multiplikationsergebnis A*B in Form eines Quotienten Q und eines Rests R bezüglich des Aufteilungswerts Z als Divisor berechnet.

Die Wahl des Aufteilungswerts Z bestimmt, in welchem Maße die Stellenanzahl des Multiplikationsverfahrens die für die *MultModDiv*-Operation benötigte Stellenanzahl übersteigt. Der Gewinn ist dann besonders groß, wenn der Absolutwert der Differenz N - Z*Z ungefähr die halbe Stellenanzahl des Moduls N aufweist. Beispielsweise kann der Aufteilungswert Z in einem vorbereitenden Verfahrensschritt als größter ganzzahliger Wert, der kleiner oder gleich der Quadratwurzel von N ist, berechnet werden. In diesem Fall vermag das Multiplikationsverfahren Operanden zu verarbeiten, die ungefähr doppelt so lang wie die Operanden der *MultModDiv*-Operation-nen sind, so daß von einer "Operandenlängenverdoppelung" gesprochen werden kann.

Die *MultModDiv*-Operationen werden in bevorzugten Ausgestaltungen von einer Hardware unterstützt, die beispielsweise als kryptographischer oder arithmetischer Koprozessor ausgestaltet sein kann. Besonders effizient ist die Hardwareunterstützung, wenn der Koprozessor die *MultModDiv*-Operationen unmittelbar auszuführen vermag. Das hier beschriebene Verfahren läßt sich jedoch auch vorteilhaft im Zusammenhang mit einer Hardware nutzen, die lediglich modulare Multiplikationen unterstützt, weil eine *MultModDiv*-Operation mit geringem Softwareaufwand durch ein Verfahren implementiert werden kann, das im wesentlichen zwei modulare Multiplikationen erfordert. Die von der Hardware bereitgestellten Operationen weisen vorzugsweise nur eine geringere als die benötigte Stellenanzahl - z.B. ungefähr die halbe Stellenanzahl - auf.

Vorzugsweise umfaßt das Multiplikationsverfahren mindestens einen Reduktionsschritt modulo N, um den Quotienten Q und den Rest R in einen gewünschten Wertebereich zu überführen. In unterschiedlichen Ausgestaltungen kann eine vollständige Reduktion modulo N oder eine nur teilweise Reduktion ausgeführt werden, die lediglich die für nachfolgende Berechnungen erforderlichen Mindestbedingungen sicherstellt.

Das Verfahren ist vorzugsweise dazu eingerichtet, als Teilschritt einer modularen Potenzberechnung ("Exponentation") ausgeführt zu werden. Insbesondere kann das Potenzberechnungsverfahren nach dem "Quadriere und Multipliziere"-Prinzip ausgestaltet sein, bei dem der Exponent bitweise durchlaufen wird und ein Zwischenergebnis für jedes "1"-Bit mit dem zu potenzierenden Grundwert multipliziert und bei jeder Fortschaltung der Bitstelle quadriert wird. Bei dieser Anwendung werden die vom Multiplikationsverfahren ermittelten Werte Q und R vorzugsweise derart bereitgestellt, daß sie sich für die nächste Multiplikation - dies schließt eine Quadrierung ein - unmittelbar als Teilwerte A1, A0 und/ oder als Teilwerte B1, B0 verwenden lassen. Vor- und nachbereitende Schritte des Multiplikationsverfahrens werden vorzugsweise für jede Potenzberechnung nur ein einziges Mal ausgeführt.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann ein derartiges Computerprogrammprodukt Programmbefehle enthalten, die bei der Herstellung und/oder Initialisierung und/ oder Personalisierung eines tragbaren Datenträgers in diesen übertragen werden.

In bevorzugten Ausgestaltungen sind das Computerprogrammprodukt und/ oder der tragbare Datenträger mit Merkmalen weitergebildet, die den oben beschriebenen und/ oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematische Zeichnung verwiesen.

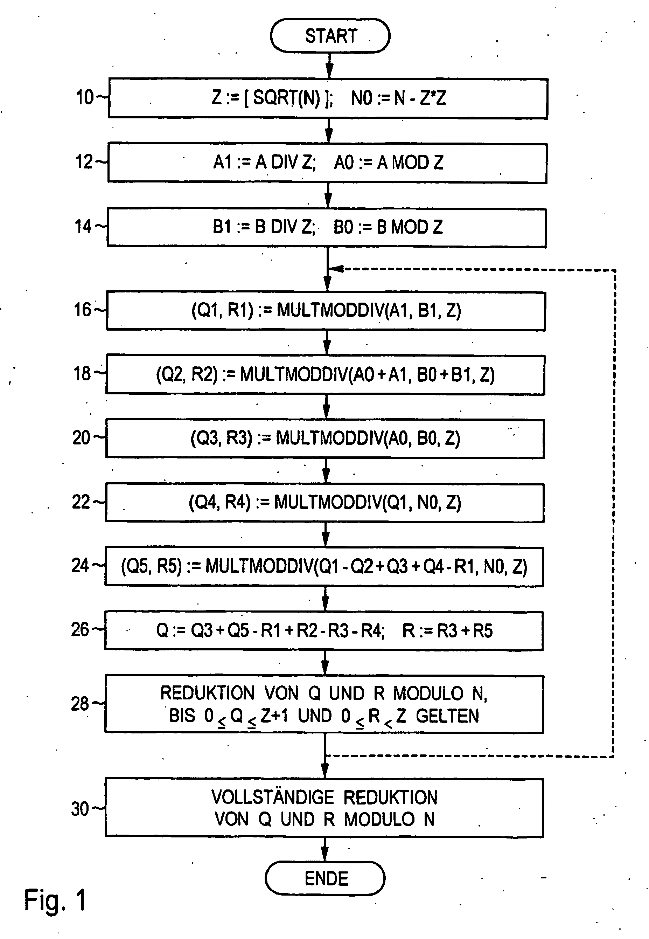

Fig. 1 als einzige Zeichnungsfigur zeigt ein Flußdiagramm eines Verfahrens zur modularen Multiplikation in einem Ausführungsbeispiel der Erfindung.

Das in Fig. 1 schematisch dargestellte Verfahren ist dazu vorgesehen, von einem Prozessor eines tragbaren Datenträgers, insbesondere einer Chipkarte (*smart card*) oder eines Chipmoduls, ausgeführt zu werden. Das Verfahren ist dazu in Form von Programmbefehlen für diesen Prozessor implementiert, die in einem ROM oder EEPROM des Datenträgers gespeichert sind. Der Datenträger weist im vorliegenden Ausführungsbeispiel ferner einen kryptographischen oder mathematischen Koprozessor auf, der diverse modulare Operationen mit einer vorgegebenen maximalen Stellenanzahl, die beispielsweise 1024 Bit betragen kann, unterstützt.

Ziel des im folgenden beschriebenen Verfahrens ist es, eine modulare Multiplikation für ganzzahlige Werte A, B bezüglich eines Moduls N bereitzustellen, wobei die Werte A, B und der Modul N eine erheblich größere Länge als die durch den Koprozessor vorgegebene Maximallänge - im vorliegenden Ausführungsbeispiel ungefähr die doppelte Länge - aufweisen. In einem konkreten Anwendungsfall wird das Verfahren eingesetzt, um auf dem Datenträger unter Verwendung von 1024-Bit-Operationen des Koprozessors ein RSA-Verfahren - z.B. zur Codierung oder Decodierung oder Verifikation oder Signaturerzeugung - mit einer Schlüssellänge von bis zu 2048 Bit zu implementieren.

Das Verfahren gemäß Fig. 1 beginnt mit drei vorbereitenden Schritten 10, 12 und 14. In Schritt 10 wird zunächst ein Aufteilungswert Z bestimmt. Der Aufteilungswert Z soll eine ganze Zahl mit der Eigenschaft sein, daß die Anzahl von Binärstellen des Absolutwerts der Differenz N - Z*Z ungefähr die Hälfte der Binärstellenanzahl des Moduls N beträgt. Diese Eigenschaft wird in Schritt 10 dadurch erzielt, daß der Aufteilungswert Z als die größte ganze Zahl berechnet wird, deren Quadrat kleiner oder gleich dem Modul N ist. In der Schreibweise von Fig. 1 bezeichnet "sqrt" die Quadratwurzel-Funktion, und die eckigen Klammern bezeichnen die sogenannte "*floor*"-Funktion, also die Abrundung auf die nächste ganze Zahl.

Zur Berechnung des Aufteilungswerts Z kann beispielsweise ein Verfahren verwendet werden, das als Algorithmus 9.2.11 aus dem Buch "*Prime Numbers"* von R. Crandall und C. Pomerance, Springer-Verlag, 2001, Seite 416, bekannt ist. Zur Initialisierung wird zunächst die Bitlänge des Moduls N, also die Anzahl der Bitstellen von N bis zum höchstwertigen "1"-Bit, ermittelt. Diese Bitlänge wird durch 2 dividiert, und der Quotient wird auf die nächste ganze Zahl aufgerundet. Das Ergebnis werde mit P bezeichnet. Die Variable X wird dann auf den Wert $2^P$ initialisiert. Daraufhin wird eine Programmschleife mit den im folgenden angegebenen Befehlen so lange ausgeführt, bis die Rücksprungbedingung erfüllt ist:

$$Y := [ (X + [ N/X ]) / 2 ]$$

$$\text{WENN } Y \geq X \text{ DANN RÜCKSPRUNG MIT ERGEBNIS } X$$

$$X := Y$$

Nachdem der Aufteilungswert Z bestimmt worden ist, wird in Schritt 10 ferner ein Ergänzungswert N0 als Differenz zwischen dem Modul N und dem Quadrat des Aufteilungswerts Z berechnet; es gelten also die Beziehungen N = Z*Z + N0 und Z*Z = -N0 modulo N. Die in Schritt 10 angeführten Berechnungen können erfolgen, sobald der Modul N bekannt ist. In manchen Anwendungsfällen kann dies schon bei der Initialisierung oder Personalisierung des Datenträgers der Fall sein; Schritt 10 kann dann auch außerhalb des Datenträgers ausgeführt werden. In Schritt 12 wird der erste zu multiplizierende Wert A bezüglich des Aufteilungswertes Z in einen ganzzahligen Quotienten und einen Rest aufgespalten, die als Teilwerte A1 und A0 bezeichnet werden. In Formelschreibweise gilt (A1, A0) = (A div Z, A mod Z), wobei "div" für die ganzzahlige Division und "mod" für die Berechnung des Divisionsrests stehen. Entsprechend werden in Schritt 14 die Teilwerte B1 und B0 als Quotient bzw. Rest einer Division des zweiten zu multiplizierenden Wertes B durch den Aufteilungswert Z berechnet. Die vorbereitenden Verfahrensschritte sind damit abgeschlossen.

Im vorliegenden Ausführungsbeispiel wird vorausgesetzt, daß sich die zu multiplizierenden Werte A, B innerhalb des Wertebereichs $0 \leq A, B < Z*Z + 2*Z$ befinden. Diese Bedingung ist beispielsweise dann erfüllt, wenn A und B modulo N reduziert sind, denn es gilt $N \leq (Z+1)*(Z+1) - 1 = Z*Z + 2*Z$ wegen der oben beschriebenen Berechnung von Z mit Z := [sqrt(N)]. Ebenso wie der Aufteilungswert Z weisen die in den Schritten 12 und 14 berechneten Teilwerte A1, A0, B1, B0 in dem hier beschriebenen Ausführungsbeispiel nur ungefähr die halbe Stellenanzahl wie der Modul N auf.

In den Schritten 16 - 28 wird der Hauptteil des hier beschriebenen Verfahrens ausgeführt. Zunächst erfolgen in den Schritten 16 - 24 insgesamt fünf Aufrufe einer modularen Operation, die hier mit *MultModDiv* bezeichnet wird. Die *MultModDiv*-Operation erhält als Argumente zwei Faktoren und einen Divisor, und sie liefert als Ergebnisse den ganzzahligen Quotienten und den Rest einer Division des Produkts der beiden Faktoren durch den Divisor. In Formelschreibweise ist die *MultModDiv*-Operation für ganze Zahlen X, Y, Z definiert durch *MultModDiv*(X, Y, Z) = ((X*Y) div Z, (X*Y) mod Z).

In einem besonders einfachen Ausführungsbeispiel, bei dem ein üblicher tragbarer Datenträger verwendet wird, ist die *MultModDiv*-Operation im wesentlichen auf zwei modulare Multiplikationen abgestützt, die von dem kryptographischen Koprozessor des Datenträgers ausgeführt werden. Zur Berechnung von *MultModDiv*(X, Y, Z) im Wertebereich $0 \leq X, Y < Z$ werden in diesem Ausführungsbeispiel die folgenden Schritte ausgeführt; der berechnete Quotient und der Rest finden sich dann in den Registern oder Speicherfeldern Q bzw. R:

$$R := X*Y \bmod Z$$

$$Z' := Z+1$$

$$R' := X*Y \bmod Z'$$

$$Q := R-R'$$

$$\text{WENN } Q < 0 \text{ DANN } Q := Q+Z'$$

Das gerade geschilderte Verfahren für die *MultModDiv*-Operation ist aus Kapitel 4 des eingangs bereits zitierten Konferenzbeitrags von Fischer und Seifert bekannt. Kapitel 5 dieses Konferenzbeitrags beschreibt eine effizientere Implementierung der *MultModDiv*-Operation, die die gleiche Komplexität wie eine einzige modulare Multiplikation aufweist. Dieses Verfahren ist an den üblichen Ablauf einer modularen Multiplikation in einem kryptographischen Koprozessor angelehnt und daher besonders gut geeignet, um per Hardware oder Mikroprogrammierung in dem Koprozessor implementiert zu werden. Bei dem Verfahren werden für Eingabewerte X, Y, Z mit dem Wertebereich $0 \leq X, Y < Z$ zur Berechnung von *MultModDiv*(X, Y, Z) die folgenden Schritte ausgeführt. Die i-te Binärstelle des Eingabewertes X wird

mit $X_i$ bezeichnet. Die Binärrepräsentation von X lautet also $X = (X_{n-1}, ..., X_1, X_0)_2$, und die Bitlänge von X hat den Wert n. Eine entsprechende Notation wird für die Werte Q und Q' verwendet. Der berechnete Quotient und der berechnete Rest nach der Ausführung des Verfahrens finden sich wieder in den mit Q und R bezeichneten Registern oder Speicherfeldern:

```
i:=n; R:=0; Q:=0; Q':=0
SOLANGE i > 0 FÜHRE AUS
```

$$i := i-1$$

$$\text{WENN } X_i = 0 \text{ DANN } R := 2*R \text{ SONST } R := 2*R + Y$$

$$\text{WENN } R \geq Z \text{ DANN } (R, Q_i) := (R-Z, 1)$$

$$\text{WENN } R \geq Z \text{ DANN } (R, Q'_i) := (R-Z, 1)$$

$$Q := Q + Q_i$$

Hinsichtlich weiterer Einzelheiten der beiden gerade beschriebenen *MultModDiv*-Verfahren wird auf den bereits zitierten Konferenzbeitrag von Fischer und Seifert verwiesen.

Bei allen fünf in den Schritten 16 - 24 ausgeführten *MultModDiv*-Operationen wird der Aufteilungswert Z als Divisor verwendet. Bei der oben beschriebenen Wahl des Aufteilunöswerts Z mit Z = [ sqrt(N) ] weisen alle Argumente der *MultModDiv*-Operationen in den Schritten 16 - 24 jeweils nur ungefähr die halbe Stellenanzahl wie der Modul N auf. Insgesamt liefert das Verfahren damit ungefähr eine Verdopplung der von dem kryptographischen Koprozessor bereitgestellten Stellenanzahl für die Modulararithmetik.

Die Faktoren der in Schritt 16 ausgeführten, ersten *MultModDiv*-Operation sind die Teilwerte A1 und B1. Die zweite, in Schritt 18 ausgeführte *MultModDiv*-Operation weist als Faktoren die Summen A0+A1 und B0+B1 auf. Bei der dritten *MultModDiv*-Operation in Schritt 20 werden die Teilwerte A0 und B0 als Faktoren verwendet. Die Ergebnisse werden in den Variablen oder Speicherfeldern Q1 - Q3 und R1 - R3 abgelegt. Offensichtlich sind die genannten Operationen in den Schritten 16 - 20 voneinander unabhängig. In Ausführungsalternativen können die Schritte 16 - 20 daher in anderer Reihenfolge oder auch ineinander verzahnt ausgeführt werden.

Die Schritte 22 und 24 betreffen zwei weitere *MultModDiv*-Operationen, in die Ergebnisse der ersten drei *MultModDiv*-Operationen einfließen. Genauer gesagt, ist ein Faktor der ersten weiteren *MultModDiv*-Operation in Schritt 22 der bei der ersten *MultModDiv*-Operation in Schritt 16 ermittelte Quotient Q1, und ein Faktor der zweiten weiteren *MultModDiv*-Operation in Schritt 24 ergibt sich aus der Summen-/Differenzberechnung Q1 - Q2 + Q3 + Q4 - R1. Die Ergebnisse der Schritte 22 und 24 werden in den Variablen oder Speicherfeldern Q4, Q5, R4 und R5 abgelegt.

Der jeweils andere Faktor in den Schritten 22 und 24 ist der Ergänzungswert N0, der im vorliegenden Ausführungsbeispiel bereits in Schritt 10 berechnet wurde, während in Ausführungsalternativen die Berechnung des Werts N0 erst später in Zusammenhang mit den Schritten 22 und 24 erfolgt. Da Schritt 24 im vorliegenden Ausführungsbeispiel die bei den anderen vier *MultModDiv*-Operationen berechneten Quotienten Q1 - Q4 benötigt, muß diese Operation als letzte ausgeführt werden. Die *MultModDiv*-Operation von Schritt 22 benötigt dagegen nur das Ergebnis Q1 von Schritt 16 und kann daher in alternativen Ausgestaltungen des Verfahrens früher als in Fig. 1 gezeigt ausgeführt werden.

Falls bei der Berechnung von Q5 und R5 in Schritt 24 ein negativer Faktor für die *MultModDiv*-Operation auftritt, so wird dieser in einen Faktor mit positivem Vorzeichen umgewandelt, und das Ergebnis der dann ausgeführten *MultModDiv*-Operation wird mittels der Beziehung -X*Y = -(Q+1)*Z + (Z - R) korrigiert, die für X*Y = Q*Z + R gilt. In alternativen Ausgestaltungen kann diese Korrektur auch erst später, z.B. im Zusammenhang mit Schritt 26, erfolgen, oder die *MultModDiv*-Operation kann so ausgelegt werden, daß sie auch negative Faktoren korrekt verarbeitet.

In Schritt 26 wird schließlich das insgesamt zu berechnende Produkt A*B modulo N in Form eines Quotienten Q und eines Rests R bezüglich des Aufteilungswerts Z als Divisor berechnet. Hierzu werden die additiven Berechnungen Q := Q3 + Q5 - R1 + R2 - R3 - R4 und R := R3 + R5 ausgeführt, bei denen die Ergebnisse der vorangegangenen *MultModDiv*-Operation herangezogen werden.

Die nach Schritt 26 vorliegenden Werte Q und R sind bereits korrekt in dem Sinne, daß Q*Z + R = A*B modulo N gilt. Allerdings können die Ergebnisse Q und R einen weiten Wertebereich einnehmen, der im Zusammenhang mit modularer Arithmetik unüblich wäre. Es ist daher ein weiterer Schritt 28 vorgesehen, in dem modulare Reduktionen vorgenommen werden, um den Wertebereich für Q und R auf $0 \leq Q \leq Z+1$ und $0 \leq R < Z$ zu reduzieren. In Ausführungsalternativen kann ein anderer Wertebereich vorgesehen sein.

Allgemein kann bei einem modularen Reduktionsschritt das Wertepaar (Q, R) durch eines der Wertepaare (Q+1, R-Z), (Q-1, R+Z), (Q+Z, R+N0) und (Q-Z, R-N0) ersetzt werden. Das Gesamtergebnis Q*Z + R modulo N ändert sich dabei nicht. Damit bei der modularen Reduktion möglichst wenig Vergleichs- und Ersetzungsschritte benötigt werden, wird in bevorzugten Ausgestaltungen eine vorgegebene Folge von Schleifen und bedingten Zuweisungen ausgeführt, die sicherstellt, daß der vorgesehene Wertebereich für Q und R schnell, zuverlässig und ohne Gefahr einer Endlosschleife erreicht wird. Im hier beschriebenen Ausführungsbeispiel ist dafür die folgende Sequenz von Reduktionsschritten R1 - R10 vorgesehen:

| | | | | |
|---|---|---|---|---|
| R1: | SOLANGE | Q < 0 | FÜHRE AUS | (Q, R) := (Q+Z, R+N0) |
| R2: | SOLANGE | Q > Z+1 | FÜHRE AUS | (Q, R) := (Q-Z, R-N0) |
| R3: | SOLANGE | R < 0 | FÜHRE AUS | (Q, R) := (Q-1, R+Z) |
| R4: | SOLANGE | R ≥ Z | FÜHRE AUS | (Q, R) := (Q+1, R-Z) |
| R5: | WENN | Q < 0 | DANN | (Q, R) := (Q+Z, R+N0) |
| R6: | WENN | R ≥ Z | DANN | (Q, R) := (Q+1, R-Z) |
| R7: | WENN | R ≥ Z | DANN | (Q, R) := (Q+1, R-Z) |
| R8: | WENN | Q > Z+1 | DANN | (Q, R) := (Q-Z, R-N0) |
| R9: | WENN | R < 0 | DANN | (Q, R) := (Q-1, R+Z) |
| R10: | WENN | R < 0 | DANN | (Q, R) := (Q-1, R+Z) |

Nach den Reduktionsschritten von Schritt 28 - oder in Ausführungsalternativen einer vergleichbaren Sequenz - erfüllen die Ergebniswerte Q und R die Bedingungen $0 \leq Q \leq Z+1$ und $0 \leq R < Z$. Damit sind für diese Ergebniswerte Q und R ebenfalls die Bedingungen erfüllt, die vor Schritt 16 für die Teilwerte A1, A0 bzw. B1, B0 gefordert wurden. Mit anderen Worten können die nach Schritt 28 vorliegenden Ergebniswerte Q, R für einen neuen Durchlauf des Multiplikationsverfahrens unmittelbar wieder als Teilwerte A1, A0 und/oder als Teilwerte B1, B0 verwendet werden, ohne daß die vorbereitenden Schritte 10 - 14 erneut ausgeführt werden müßten. Dieser Programmablauf ist in Fig. 1 durch einen gestrichelten Pfeil angedeutet.

Die gerade genannte Eigenschaft ist insbesondere dann von Bedeutung, wenn das hier beschriebene Multiplikationsverfahren als Teil einer modularen Potenzberechnung nach dem "Quadriere und Multipliziere"-Prinzip ausgeführt wird. Für eine Quadrierung des jeweiligen Zwischenergebnisses brauchen beim Sprung von Schritt 28 nach Schritt 16 nur die Zuweisungen A1 := Q, A0 := R, B1 := Q und B0 := R erfolgen. Für eine Multiplikation des Zwischenergebnisses mit dem Grundwert wird z.B. A1 := Q und A0 := R gesetzt, während die Teilwerte B1 und B0 auf gespeicherte Werte gesetzt werden, die anfangs, ähnlich wie in Schritt 14, aus dem zu potenzierenden Grundwert bestimmt wurden.

Nach dem - gegebenenfalls mehrfachen - Durchlauf der Schritte 16 - 28 als Hauptteil des Verfahrens kann in einem ergänzenden Schritt 30 noch eine vollständige Reduktion der Ergebnisse Q und R modulo N erfolgen. Im hier beschriebenen Ausführungsbeispiel können in Schritt 30 die folgenden bedingten Zuweisungen als abschließende Reduktionsschritte R11 und R12 ausgeführt werden:

| | | | | |
|---|---|---|---|---|
| R11: | WENN | Q = Z+1 | DANN | (Q, R) := (Q-1, R+Z) |
| R12: | WENN | R ≥ N0 | DANN | (Q, R) := (Q-Z, R-N0) |

Die modulare Multiplikation ist damit beendet. Das Endergebnis liegt nun in Form der vollständig modulo N reduzierten Werte Q und R mit Q*Z + R = A*B modulo N vor.

Es versteht sich, daß die in der obigen Beschreibung von Ausführungsbeispielen enthaltenen Einzelheiten nicht als Einschränkungen des Schutzbereichs der Erfindung aufgefaßt werden sollen. Viele Abwandlungen und weitere Ausführungsalternativen sind möglich und für den Fachmann offensichtlich.

**Patentansprüche**

1. Verfahren zum maschinellen Ausführen durch einen tragbaren Datenträger, insbesondere eine Chipkarte oder ein Chipmodul, einer modularen Multiplikation zweier Werte A, B bezüglich eines Moduls N, der eine erste Stellenanzahl aufweist, wobei :

   - der erste zu multiplizierende Wert A für einen Aufteilungswert Z durch zwei Teilwerte A1, A0 mit A = A1*Z + A0 dargestellt wird und der zweite zu multiplizierende Wert B durch zwei Teilwerte B1, B0 mit B = B1*Z + B0 dargestellt wird, wobei Z so gewählt wird, dass der Absolutwert der Differenz N-Z*Z eine zweite Stellenanzahl aufweist, die kleiner als die Stellenanzahl von N ist,
   - die folgenden *MultModDiv*-Operationen ausgeführt werden, die jeweils den ganzzahligen Quotienten und den Rest einer Division des Produkts zweier Faktoren mit höchstens der zweiten Stellenanzahl durch den Aufteilungswert Z ermitteln:

      -- eine erste *MultModDiv*-Operation (16) mit den Teilwerten A1 und B1 als Faktoren,
      -- eine zweite *MultModDiv*-Operation (18) mit einem sich aus der Summe (A0+A1) ergebenden ersten Faktor und einem sich aus der Summe (B0+B1) ergebenden zweiten Faktor,
      -- eine dritte *MultModDiv*-Operation (20) mit den Teilwerten A0 und B0 als Faktoren, und
      -- genau zwei weitere *MultModDiv*-Operation (22, 24), bei denen jeweils der erste Faktor von zumindest einem Ergebnis der ersten, zweiten und/oder dritten *MultModDiv*-Operation abhängt und der zweite Faktor ein Ergänzungswert N0 ist, für den Z*Z = -N0 modulo N gilt, und

   - ein Quotient Q und ein Rest R mit Q*Z + R = A*B in Abhängigkeit von zumindest einem Ergebnis der *MultModDiv*-Operationen berechnet werden.

2. Verfahren nach Anspruch 1, **dadurch gekennzeichnet, daß** die zweite *MultModDiv*-Operation (18) die Summe A0+A1 als ersten Faktor und die Summe B0+B1 als zweiten Faktor aufweiset.

3. Verfahren nach Anspruch 2, **dadurch gekennzeichnet, daß** die folgenden fünf *MultModDiv*-Operation ausgeführt werden:

   - (Q1, R1) := *MultModDiv* (A1, B1, Z),
   - (Q2, R2) := *MultModDiv* (A0+A1, B0+B1, Z),
   - (Q3, R3) := *MultModDiv* (A0, B0, Z),
   - (Q4, R4) := *MultModDiv* (Q1, N0, Z), und
   - (Q5, R5) := *MultModDiv* (Q1-Q2+Q3+Q4-R1, N0, Z).

4. Verfahren nach Anspruch 3, **dadurch gekennzeichnet, daß** der Quotient Q und der Rest R durch Q := Q3 + Q5 - R1 + R2 - R3 - R4 und R := R3 + R5 berechnet werden.

5. Verfahren nach einem der Ansprüche 1 bis 4, **dadurch gekennzeichnet, daß** der Aufteilungswert Z derart bestimmt wird, daß der Absolutwert der Differenz N - Z*Z eine Stellenanzahl zwischen 25 % und 75 %, vorzugsweise zwischen 40 % und 60 %, der Stellenanzahl von N aufweist.

6. Verfahren nach einem der Ansprüche 1 bis 5, **dadurch gekennzeichnet, daß** der Aufteilungswert Z in einem vorbereitenden Schritt (10) als größter ganzzahliger Wert, der kleiner oder gleich der Quadratwurzel von N ist, berechnet wird.

7. Verfahren nach einem der Ansprüche 1 bis 6, **dadurch gekennzeichnet, daß** in mindestens einem vorbereitenden Schritt (12,14) die Teilwerte A1, A0 durch eine Division mit Rest des Wertes A durch den Aufteilungswert Z berechnet werden und die Teilwerte B1, B0 durch eine Division mit Rest des Wertes B durch den Aufteilungswert Z berechnet werden.

8. Verfahren nach einem der Ansprüche 1 bis 7, **dadurch gekennzeichnet, daß** mindestens ein Reduktionsschritt modulo N ausgeführt wird (28, 30), um für den Quotienten Q einen Wertebereich $0 \leq Q \leq Z+1$ und für den Rest R einen Wertebereich $0 \leq R < Z$ zu erhalten.

9. Verfahren nach einem der Ansprüche 1 bis 8, **dadurch gekennzeichnet, daß** das Verfahren zur Ausführung durch eine Hardware vorgesehen ist, die *MultModDiv*-Operationen unterstützt.

10. Verfahren nach einem der Ansprüche 1 bis 9, **dadurch gekennzeichnet, daß** die Hardware *MultModDiv*-Operationen und/oder modulare Multiplikationen mit einer dem Aufteilungswert Z entsprechenden Stellenanzahl unterstützt, nicht jedoch modulare Multiplikationen mit einer dem Modul N entsprechenden Stellenanzahl.

11. Verfahren nach einem der Ansprüche 1 bis 10, **dadurch gekennzeichnet, daß** das Verfahren dazu vorgesehen ist, in Zusammenhang mit einem RSA-Codierverfahren oder einem RSA-Decodierverfahren oder einem RSA-Verifikationsverfahren oder einem RSA-Signaturverfahren eingesetzt zu werden.

12. Verfahren nach einem der Ansprüche 1 bis 11, **dadurch gekennzeichnet, daß** das Verfahren als Teilschritt in einer modularen Potenzberechnung ausgeführt wird.

13. Verfahren nach Anspruch 12, **dadurch gekennzeichnet, daß** das Multiplikationsverfahren den Quotienten Q und den Rest R derart bereitstellt, daß die Werte Q, R bei einem weiteren Durchlauf des Multiplikationsverfahrens im Rahmen der modularen Potenzberechnung unmittelbar als Teilwerte A1, A0 und/oder als Teilwerte B1, B0 verwendbar sind.

14. Computerprogrammprodukt, das Programmbefehle aufweist, die dazu eingerichtet sind, mindestens einen Prozessor eines tragbaren Datenträgers, insbesondere einer Chipkarte oder eines Chipmoduls, zu veranlassen, ein Verfahren mit den Merkmalen eines der Ansprüche 1 bis 13 auszuführen.

15. Tragbarer Datenträger, insbesondere Chipkarte oder Chipmodul, der zur Ausführung eines Verfahrens mit den Merkmalen eines der Ansprüche 1 bis 13 eingerichtet ist.

16. Tragbarer Datenträger nach Anspruch 15, **dadurch gekennzeichnet, daß** der Datenträger einen Koprozessor aufweist, der *MultModDiv*-Operationen unterstützt.

**Claims**

1. Method for automatically executing, by means of a portable data carrier, in particular a smart card or a chip module, a modular multiplication of two values A, B in relation to a modulus N having a first number of digits, wherein:

- the first value A to be multiplied is represented, for a decomposition value Z, by two partial values A1, A0 with A = A1*Z + A0, and the second value B to be multiplied is represented by two partial values B1, B0 with B = B1*Z + B0 with Z being selected such that the absolute value of the difference N-Z*Z has a second number of digits smaller than the number of digits of N,
- the following *MultModDiv* operations are executed, which respectively determine the integer quotient and the remainder of a division by the decomposition value Z of the product of two factors having at most the second number of digits:

-- a first *MultModDiv* operation (16) with the partial values A1 and B1 as factors,
-- a second *MultModDiv* operation (18) with a first factor resulting from the sum (A0+A1) and a second factor resulting from the sum (B0+B1),
-- a third *MultModDiv* operation (20) with the partial values A0 and B0 as factors, and
-- exactly two more *MultModDiv* operations (22, 24), wherein the first factor, respectively, depends on at least one result of the first, second and/or third *MultModDiv* operation and the second factor is a supplementary value N0, for which Z*Z = -N0 modulo N applies, and

- a quotient Q and a remainder R with Q*Z + R = A*B are calculated dependent upon at least one result of the *MultModDiv* operations.

2. Method according to claim 1, **characterised in that** the second *MultModDiv* operation (18) has the sum A0+A1 as first factor and the sum B0+B1 as second factor.

3. Method according to claim 2, **characterised in that** the following five *MultModDiv* operations are executed:

- (Q1, R1) := *MultModDiv* (A1, B1, Z),
- (Q2, R2) := *MultModDiv* (A0+A1, B0+B1, Z),
- (Q3, R3) := *MultModDiv* (A0, B0, Z),
- (Q4, R4) := *MultModDiv* (Q1, N0, Z), and
- (Q5, R5) := *MultModDiv* (Q1-Q2+Q3+Q4-R1, N0, Z).

4. Method according to claim 3, **characterised in that** the quotient Q and the remainder R are calculated by Q := Q3 + Q5 - R1 + R2 - R3 - R4 and R:=R3+R5.

5. Method according to any one of the claims 1 to 4, **characterised in that** the decomposition value Z is determined such that the absolute value of the difference N - Z*Z has a number of digits between 25% and 75%, preferably between 40% and 60%, of the number of digits of N.

6. Method according to any one of the claims 1 to 5, **characterised in that** the decomposition value Z, in a preparative step (10), is calculated as the largest integer value less than or equal to the square root of N.

7. Method according to any one of the claims 1 to 6, **characterised in that**, in at least one preparative step (12, 14), the partial values A1, A0 are calculated by a division with remainder of the value A by the decomposition value Z, and the partial values B1, B0 are calculated by a division with remainder of the value B by the decomposition value Z.

8. Method according to any one of the claims 1 to 7, **characterised in that** at least one reduction step modulo N is executed (28, 30) in order to obtain a value range $0 \leq Q \leq Z+1$ for the quotient Q, and a value range $0 \leq R < Z$ for the remainder R.

9. Method according to any one of the claims 1 to 8, **characterised in that** the method is provided for execution by a hardware that supports *MultModDiv* operations.

10. Method according to any one of the claims 1 to 9, **characterised in that** the hardware supports *MultModDiv* operations and/or modular multiplications with a number of digits corresponding to the decomposition value Z, but not modular multiplications with a number of digits corresponding to the modulus N.

11. Method according to any one of the claims 1 to 10, **characterised in that** the method is provided to be employed in connection with an RSA encoding method or an RSA decoding method or an RSA verification method or an RSA signature method.

12. Method according to any one of the claims 1 to 11, **characterised in that** the method is executed as a partial step in a modular exponentiation.

13. Method according to claim 12, **characterised in that** the multiplication method provides the quotient Q and the remainder R such that the values Q, R are directly usable as partial values A1, A0 and/ or as partial values B1, B0 in a further run of the multiplication method within the context of modular exponentiation.

14. Computer program product having program commands adapted to cause at least one processor of a portable data carrier, in particular of a smart card or of a chip module, to execute a method having the features of any one of the claims 1 to 13.

15. Portable data carrier, in particular smart card or chip module, which is adapted for executing a method having the features of any one of the claims 1 to 13.

16. Portable data carrier according to claim 15, **characterised in that** the data carrier has a coprocessor which supports *MultModDiv* operations.

**Revendications**

1. Procédé pour l'exécution automatique par un support de données portable, en particulier une carte à puce ou un module de puce, d'une multiplication modulaire de deux valeurs A, B par rapport à un modulo N qui présente un premier nombre de chiffres, dans lequel

- la première valeur à multiplier A pour une valeur de division Z est représentée par deux valeurs partielles A1, A0, avec A = A1 * Z + A0, et la deuxième valeur à multiplier B est représentée par deux valeurs partielles B1, B0 avec B = B1 * Z + B0, Z étant choisi de telle sorte que la valeur absolue de la différence N - Z * Z présente un deuxième nombre de chiffres qui est inférieur au nombre de chiffres de N,
- les opérations MultModDiv suivantes sont exécutées qui déterminent respectivement le quotient entier et le reste d'une division du produit de deux facteurs avec au maximum le deuxième nombre de chiffres par la valeur de division Z :
- une première opération MultModDiv (16) avec les valeurs partielles A1 et B1 comme facteurs,
- une deuxième opération MultModDiv (18) avec un premier facteur résultant de la somme (A0 + A1) et un deuxième facteur résultant de la somme (B0 + B1),

- une troisième opération MultModDiv (20) avec les valeurs partielles A0 et B0 comme facteurs, et
- exactement deux autres opérations MultModDiv (22, 24) dans lesquelles respectivement le premier facteur dépend d'au moins un résultat de la première, deuxième et/ou troisième opération MultModDiv et le deuxième facteur est une valeur complémentaire N0 pour laquelle Z * Z = -N0 modulo N est vrai, et

- un quotient Q et un reste R avec Q * Z + R = A * B sont calculés en fonction d'au moins un résultat des opérations MultModDiv.

2. Procédé selon la revendication 1, **caractérisé en ce que** la deuxième opération MultModDiv (18) présente la somme A0 + A1 comme premier facteur et la somme B0 + B1 comme deuxième facteur.

3. Procédé selon la revendication 2, **caractérisé en ce que** les cinq opérations MultModDiv suivantes sont exécutées :

- (Q1, R1) := MultModDiv(A1, B1, Z),
- (Q2, R2) := MultModDiv (A0+A1, B0+B1, Z),
- (Q3, R3) := MultModDiv(A0, B0, Z),
- (Q4, R4) := MultModDiv(Q1, N0, Z), et
- (Q5, R5) := MultModDiv(Q1-Q2+Q3+Q4-R1,N0, Z).

4. Procédé selon la revendication 3, **caractérisé en ce que** le quotient Q et le reste R sont calculés par Q := Q3 + Q5 - R1 + R2 - R3 - R4 et R := R3 + R5.

5. Procédé selon l'une quelconque des revendications 1 à 4, **caractérisé en ce que** la valeur de division Z est déterminée de telle sorte que la valeur absolue de la différence N - Z * Z présente un nombre de chiffres entre 25 % et 75 %, de préférence entre 40 % et 60 %, du nombre de chiffres de N.

6. Procédé selon l'une quelconque des revendications 1 à 5, **caractérisé en ce que** la valeur de division Z est calculée dans une étape préparatoire (10) comme la plus grande valeur entière qui est inférieure ou égale à la racine carrée de N.

7. Procédé selon l'une quelconque des revendications 1 à 6, **caractérisé en ce que** dans au moins une étape préparatoire (12, 14), les valeurs partielles A1, A0 sont calculées par une division avec le reste de la valeur A par la valeur de division Z et les valeurs partielles B1, B0 sont calculées par une division avec le reste de la valeur B par la valeur de division Z.

8. Procédé selon l'une quelconque des revendications 1 à 7, **caractérisé en ce qu'**au moins une étape de réduction modulo N est exécutée (28, 30) afin d'obtenir pour le quotient Q une plage de valeurs de $0 \leq Q \leq Z+1$ et pour le reste R une plage de valeurs de $0 \leq R < Z$.

9. Procédé selon l'une quelconque des revendications 1 à 8, **caractérisé en ce que** le procédé est prévu pour être exécuté par un équipement physique qui prend en charge des opérations MultModDiv.

10. Procédé selon l'une quelconque des revendications 1 à 9, **caractérisé en ce que** l'équipement physique prend en charge des opérations MultModDiv et/ou des multiplications modulaires avec un nombre de chiffres correspondant à la valeur de division Z, mais pas des multiplications modulaires avec un nombre de chiffres correspondant au modulo N.

**11.** Procédé selon l'une quelconque des revendications 1 à 10, **caractérisé en ce que** le procédé est prévu pour être mis en oeuvre en conjonction avec un procédé de codage RSA ou un procédé de décodage RSA ou un procédé de vérification RSA ou un procédé de signature RSA.

**12.** Procédé selon l'une quelconque des revendications 1 à 11, **caractérisé en ce que** le procédé est exécuté comme une étape partielle dans un calcul de puissance modulaire.

**13.** Procédé selon la revendication 12, **caractérisé en ce que** le procédé de multiplication fournit le quotient Q et le reste R de telle sorte que les valeurs Q, R sont utilisables dans un passage supplémentaire du procédé de multiplication dans le cadre du calcul exponentiel modulaire directement comme des valeurs partielles A1, A2 et/ou comme des valeurs partielles B1, B0.

**14.** Produit de programme informatique présentant des instructions de programme qui sont conçues pour amener au moins un processeur d'un support de données portable, en particulier d'une carte à puce ou d'un module de puce, à exécuter un procédé ayant les particularités d'une des revendications 1 à 13.

**15.** Support de données portable, en particulier une carte à puce ou un module de puce, qui est conçu pour exécuter un procédé ayant les particularités d'une des revendications 1 à 13.

**16.** Support de données portable selon la revendication 15, **caractérisé en ce que** le support de données présente un coprocesseur qui prend en charge des opérations MultModDiv.

START

10 — $Z := [\, SQRT(N)\,];\quad N0 := N - Z^*Z$

12 — $A1 := A\ DIV\ Z;\quad A0 := A\ MOD\ Z$

14 — $B1 := B\ DIV\ Z;\quad B0 := B\ MOD\ Z$

16 — $(Q1,\ R1) := MULTMODDIV(A1,\ B1,\ Z)$

18 — $(Q2,\ R2) := MULTMODDIV(A0 + A1,\ B0 + B1,\ Z)$

20 — $(Q3,\ R3) := MULTMODDIV(A0,\ B0,\ Z)$

22 — $(Q4,\ R4) := MULTMODDIV(Q1,\ N0,\ Z)$

24 — $(Q5,\ R5) := MULTMODDIV(Q1 - Q2 + Q3 + Q4 - R1,\ N0,\ Z)$

26 — $Q := Q3 + Q5 - R1 + R2 - R3 - R4;\quad R := R3 + R5$

28 — REDUKTION VON Q UND R MODULO N,
BIS $0 \leq Q \leq Z+1$ UND $0 \leq R < Z$ GELTEN

30 — VOLLSTÄNDIGE REDUKTION
VON Q UND R MODULO N

ENDE

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4405829 A
- WO 2005022378 A1

**In der Beschreibung aufgeführte Nicht-Patentliteratur**

- **P. PAILLIER.** Public-Key Cryptography'', Band 1560 der Lecture Notes in Computer Science,. Springer-Verlag, 1999, 223-234
- ''Increasing the bitlength of a crypto-coprocessor''. **W. FISCHER ; J.-P. SEIFERT.** Workshop on Cryptographic Hardware and Embedded Systems 2002 (CHES 2002)'', Band 2523 der Lecture Notes in Computer Science,. Springer-Verlag, 2003, 71-81
- **DONALD E. KNUTH.** *''The Art of Computer Programming,* 1997, vol. 2, 294, 295
- **A. KARATSUBA ; YU. OFMAN.** *''Multiplication of multidigit numbers on automata,* 1963, vol. 7, 595-596